# EUROPÄISCHE PATENTSCHRIFT

(11) **EP 2 880 235 B1**
(45) Veröffentlichungstag und Bekanntmachung des Hinweises auf die Patenterteilung: **20.12.2017**
(21) Anmeldenummer: 13750503.8
(22) Anmeldetag: 02.08.2013
(51) Int. Cl.: E05F 15/00

(54) **VERFAHREN ZUR STEUERUNG EINER VERSTELLBEWEGUNG EINES FAHRZEUGSCHLIEßELEMENTS MIT KOLLISIONSVERMEIDUNG FÜR EINEN SCHLOSSBEREICH UND EINKLEMMSCHUTZSYSTEM**
METHOD FOR CONTROLLING AN ADJUSTING MOVEMENT OF A VEHICLE CLOSING ELEMENT WITH COLLISION AVOIDANCE FOR A LOCK REGION AND ANTI-TRAP SYSTEM
PROCÉDÉ DE COMMANDE D'UN MOUVEMENT D'UN ÉLÉMENT DE FERMETURE D'UN VÉHICULE AVEC ÉVITEMENT DE COLLISION POUR UNE ZONE DE SERRURE ET SYSTÈME ANTI-PINCEMENT

(30) Priorität: 02.08.2012 DE 102012107116
(43) Veröffentlichungstag der Anmeldung: 10.06.2015
(73) Patentinhaber: Brose Fahrzeugteile GmbH & Co. Kommanditgesellschaft, Bamberg, 96052 Bamberg (DE)
(72) Erfinder: WÜRSTLEIN, Holger, 97475 Zeil am Main (DE); HERRMANN, Christian, 96450 Coburg (DE); POHL, Florian, 96237 Ebersdorf (DE)
(74) Vertreter: Maikowski & Ninnemann Patentanwälte Partnerschaft mbB
(86) Internationale Anmeldenummer: PCT/EP2013/002303
(87) Internationale Veröffentlichungsnummer: WO 2014/019702

(56) Entgegenhaltungen:
- WO-A2-2006/032357
- US-A1- 2007 035 156
- US-B2- 7 855 566

## Beschreibung

Die vorliegende Erfindung betrifft ein Verfahren zur Steuerung einer Verstellbewegung eines fremdkraftbetätigt zu schließenden Fahrzeugschließelements nach dem Oberbegriff des Anspruch 1 sowie eine kapazitives Einklemmschutzsystem nach dem Oberbegriff des Anspruchs 9. Bei Fahrzeugschließelementen, die zunehmend fremdkraftbetätigt, insbesondere motorisch verstellbar sind, besteht beim Schließen des jeweiligen Fahrzeugschließelements das erhebliche Risiko, dass beispielsweise ein Körperteil einer in der Nähe des Fahrzeugs stehenden Person eingeklemmt wird, was zu erheblichen Verletzungen führen kann. Bei einem derartigen Fahrzeugschließelement kann es sich beispielsweise um eine Seitentür, eine Heckklappe, eine Fensterscheibe oder ein Schiebedach eines Kraftfahrzeugs handeln.

Einklemmschutzsysteme sind beispielsweise aus der US 7 855 566 B2 und der WO 2006/032357 A2 bekannt.

In der US 2007/0035156 A1 ist beispielsweise ein Einklemmschutzsystem beschrieben, bei dem zwei Elektrodenanordnungen mit je einer Sendeelektrode und einer Empfangselektrode an einander gegenüberliegenden längsseitigen Schließkanten einer Fahrzeugheckklappe vorgesehen sind. Die einzelnen Elektrodenpaare definieren je einen Überwachungsbereich an einer Schließkante der Heckklappe, in dem ein Hindernis im Verstellweg der sich schließenden Heckklappe detektierbar ist. Die Ansteuerung und Auswertung der beiden Elektrodenpaare erfolgt dabei jeweils separat. Eine elektronische Auswerteeinheit des Einklemmschutzsystems der US 2007/0035156 A1 empfängt somit stets wenigstens zwei Signale, anhand derer die elektronische Auswerteeinheit auf das Vorliegen eines Hindernisses in dem einen oder in dem anderen Überwachungsbereich schließen kann.

Bei an sich weithin bekannten kapazitiven Einklemmschutzsystemen an Fahrzeugen, insbesondere an Kraftfahrzeugen wird ein Hindernis im Verstellweg eines motorisch zu schließenden Fahrzeugschließelements berührungslos durch eine sich ändernde elektrische Kapazität detektiert und verhindert, dass ein Hindernis zwischen dem sich schließenden Fahrzeugschließelement und einer Fahrzeugstruktur im Bereich einer Karosserieöffnung, die durch das Fahrzeugschließelement in einer Schließposition verschlossen werden soll, eingeklemmt wird. Gegenüber rein taktilen Einklemmschutzsystemen bieten Einklemmschutzsysteme mit einer kapazitiven Erkennung den Vorteil, dass ein eventuelles Hindernis bereits vor dem Kontakt mit dem Fahrzeugschließelement oder bereits kurz danach festgestellt werden können, ohne dass eine bestimmte Kraft auf die Sensorik des Einklemmschutzsystems wirken muss, damit das System auslöst und die Verstellbewegung des Fahrzeugschließelements stoppt und/oder reversiert.

Bei kapazitiven Einklemmschutzsystemen, die der vorliegenden Erfindung zugrunde gelegt sind, macht man sich zunutze, dass bei einer Elektrodenanordnung des Einklemmschutzsystems bestehend aus mindestens einer Sendeelektrode und einer Empfangselektrode ein Signal an der Empfangselektrode empfangbar ist, das für das Vorliegen eines Hindernisses charakteristisch ist, wenn die Sendeelektrode mit elektrischem Wechselstrom angesteuert wird. So wird durch Ansteuerung der Sendeelektrode mit Wechselstrom ein elektrisches Feld erzeugt, das durch ein Hindernis derart beeinflusst wird, dass eine elektrische Kapazität messbar verändert wird. Diese messbare Veränderung der elektrischen Kapazität ist an der Empfangselektrode, die zu der Sendeelektrode beabstandet angeordnet ist, messbar und kann anhand eines von der Empfangselektrode empfangenen Signals, üblicherweise eines Spannungssignals, ausgewertet werden, um das Einklemmschutzsystem auszulösen und Einfluss auf die Verstellbewegung des Fahrzeugschließelements zu nehmen.

Jedoch birgt die fremdkraftbetätigte Verstellung eines Fahrzeugschließelementes nicht nur durch ein etwaiges Einklemmen ein erhöhtes Verletzungsrisiko. Regelmäßig geht auch von einem an dem Fahrzeugschließelement vorgesehenen Verriegelungsteil, wie einem Schloss, ein nicht unwesentliches Verletzungsrisiko aus. Derartige Verriegelungsteile, mittel denen eine Verriegelung des Fahrzeugschließelements in der geschlossenen Position an der Fahrzugstruktur erfolgt, stehen teilweise an dem Fahrzeugschließelement mehrere Zentimeter vor, so dass Kollision gerade des Verriegelungsteils mit einer Person beim Verstellen des Fahrzeugschließelements wahrscheinlich ist. Zudem sind solche Verriegelungsteile üblicherweise sehr massiv und größtenteils aus Metall, so dass eine Kollision damit für eine Person besonders schmerzhaft ist.

Der vorliegenden Erfindung liegt daher die Aufgabe zugrunde, ein kapazitives Einklemmschutzsystem der eingangs genannten Art weiter zu verbessern und insbesondere das Verletzungsrisiko für eine Person durch eine Kollision mit einem an dem Fahrzeugsschließelement vorgesehenen Verriegelungsteil wie einem Türschloss oder Heckklappenschloss zu minimieren.

Diese Aufgabe wird sowohl mit dem Verfahren des Anspruchs 1 als auch mit dem kapazitiven Einklemmschutzsystem des Anspruchs 9 gelöst.

Dabei zeichnet sich das Verfahren zur Steuerung einer Verstellbewegung eines fremdkraftbetätigt zu schließenden Fahrzeugschließelements gemäß dem Anspruch 1 dadurch aus, dass mittels eines kapazitiven Einklemmschutzsystems auch ein Hindernis einem Überwachungsbereich um ein an dem Fahrzeugschließelement vorgesehenes Verriegelungsteil detektiert wird, um wenigstens beim Schließen des Fahrzeugschließelements eine Kollision dieses Verriegelungsteils mit einem Hindernis zu verhindern. Wird ein Hindernis in dem Überwachungsbereich um das Verriegelungsteil detektiert, wird eine Verstellbewegung des Fahrzeugschließelements gestoppt und/oder reversiert, um die Kollision mit dem Hindernis zu vermeiden.

In einer ersten erfindungsgemäßen Ausführungsvariante ist vorgesehen, dass sich zwei Elektrodenpaare des kapazitiven Einklemmschutzsystems mit jeweils einer Sendeelektrode und einer zugehörige Empfangselektrode jeweils über wenigstens einen Teil zweier unterschiedlicher Schließkanten des Fahrzeugschließelements derart erstrecken, dass mit jedem Elektrodenpaar anhand einer sich durch ein Hindernis ändernden elektrischen Kapazität sowohl eine Einklemmsituation an mindestens einer der Schließkanten als auch eine bevorstehende Kollision des Verriegelungsteils mit einem Hindernis detektierbar sind. Bei einer Schließkante des Fahrzeugschließelements handelt es sich um die Abschnitte an einem äußeren Rand des Fahrzeugschließelements, über die das Fahrzeugschließelement in seiner vollständig geschlossenen Position bzw. Schließposition an der Fahrzeugstruktur anliegt. Genau an einer solchen Schließkante würde folglich ein Hindernis zwischen der Fahrzeugstruktur und dem Fahrzeugschließelement eingeklemmt werden, wenn das Einklemmschutzsystem nicht bestimmungsgemäß anschlägt und die Verstellbewegung des Fahrzeugschließelements stoppt und/oder reversiert. In dieser ersten erfindungsgemäßen Ausführungsvariante sind nun die Elektroden eines Elektrodenpaares für die Detektion einer Einklemmsituation auch dazu verwendet, gezielt einen Überwachungsbereich um das Verriegelungsteil, also zum Beispiel ein Heckklappenschloss zu überwachen, um eine etwaige Kollision des Verriegelungsteils mit einem Hindernis zu vermeiden. Hierfür kann beispielsweise eine der Elektroden - vorzugsweise beide Elektroden - an dem Fahrzeugschließelement so angeordnet sein, dass sie sich bis oder sogar über einen Abschnitt hinweg erstreckt bzw. erstrecken, an dem sich das Verriegelungsteil befindet. Hierbei kann sich eine Elektrode über mehrere (wenigstens zwei) zueinander unterschiedliche und unter einem Winkel zueinander verlaufende Schließkanten erstrecken, also beispielsweise an einer Kraftfahrzeug-Heckklappe sowohl über eine seitliche, längs verlaufende Schließkante wie auch über eine untere, quer verlaufende Schließkante, an der üblicherweise ein Teil des Heckklappenschlosses oder sogar das komplette Heckklappenschloss angeordnet ist.

In einer zweiten erfindungsgemäßen Ausführungsvariante weist das kapazitive Einklemmschutzsystem wenigstens ein erstes und ein zweites Elektrodenpaar auf, die jeweils zur Erzeugung eines elektrischen Feldes in einen Überwachungsbereich sowie zur Feststellung einer sich durch ein Hindernis ändernden elektrischen Kapazität ausgebildet und vorgesehen sind. Die beiden Elektrodenpaare sind hier nun aber ferner noch so angeordnet und werden so untereinander verschaltet, dass mittels der beiden Elektrodenpaare eine Kapazitätsänderung nicht nur in den beiden jeweiligen Überwachungsbereichen, sondern auch in einem zu den beiden (ersten und zweiten) Überwachungsbereichen unterschiedlichen dritten Überwachungsbereich detektierbar ist, in dem das Verriegelungsteil liegt. Dabei wird unter einem Verschalten der beiden Elektrodenpaare untereinander insbesondere verstanden, dass eine erste Sendeelektrode eines ersten Elektrodenpaares nicht nur mit einer ersten Empfangselektrode desselben Elektrodenpaares angesteuert und ausgewertet wird, sondern auch zusammen mit einer zweiten Empfangselektrode des zweiten Elektrodenpaares. So lassen sich durch zwei Elektrodenpaare wenigstens drei zueinander unterschiedliche räumliche Überwachungsbereiche definieren, die beispielsweise gezielt nacheinander durch entsprechende Ansteuerung der Elektroden ausgewertet werden können, um eine Kapazitätsänderung durch ein Hindernis in dem jeweiligen Überwachungsbereich festzustellen. Dabei erstrecken sich beide Elektrodenpaare zueinander beabstandet auf unterschiedlichen Seiten des Verriegelungsteils, so dass das Verriegelungsteil zwischen den beiden Elektrodenpaaren liegt. Der durch die Verschaltung der beiden Elektrodenpaare sich ergebende dritte Überwachungsbereich erstreckt sich somit im Wesentlichen zwischen den beiden Elektrodenpaaren, vorzugsweise zwischen den freien Enden der längserstreckt ausgebildeten Elektroden der Elektrodenpaare.

Durch die erfindungsgemäße Ausprägung eines Steuerverfahrens wird mittels eines Einklemmschutzsystems nicht nur berührungslos eine Einklemmsituation festgestellt, sondern auch eine bevorstehende Kollision im Bereich eines Verriegelungsteils, wie zum Beispiel einem Türschloss, einem Kofferraumschloss oder einem Heckklappenschloss. Durch das erfindungsgemäße Verfahren wird somit ein Einklemmschutz mit einem Kollisionsschutz kombiniert, um gezielt Verletzungen durch das Verriegelungsteil beim Schließen und gegebenenfalls auch beim Öffnen des Fahrzeugschließelements zu vermeiden. So geht von einem Verriegelungsteil an einem Fahrzeugschließelement üblicherweise ein erhöhtes Verletzungsrisiko aus, da dieses meistens an dem Fahrzeugschließelement vorsteht und zur Bereitstellung einer zuverlässigen Verriegelung an der Fahrzeugstruktur vergleichsweise massiv ausgebildet ist.

Gerade bei einem Fahrzeugschließelement in Form einer Kraftfahrzeug-Heckklappe steht häufig ein wesentlicher Teil eines Heckklappenschlosses an der unteren Schließkante der Heckklappe hervor. Hierdurch kann es grundsätzlich vorkommen, dass dieses (Verriegelungs-) Teil bei Verstellung der Heckklappe aus einer geöffneten Position in Richtung einer geschlossenen bzw. Schließposition mit einer Person kollidiert, insbesondere im Bereich des Kopfes. Durch eine Erweiterung eines kapazitiven Einklemmschutzsystems um einen Kollisionsschutz, um eine Person im Verstellweg des Fahrzeugschließelements als ein Hindernis detektieren zu können, wird das Verletzungsrisiko erheblich gesenkt.

Wie auch beim Detektieren eines Einklemmfalles wird auch bei einer bevorstehenden Kollision durch das Einklemmschutzsystem Einfluss auf die Verstellbewegung des Fahrzeugschließelements genommen, vorzugsweise die Verstellbewegung gestoppt und/oder reversiert. Bevorzugt erfolgt die Auswertung, ob ein Einklemmfall vorliegt und ob eine Kollision des Verriegelungsteils mit einem Hindernis bevorsteht, mittels einer elektronischen Auswerteeinheit des Einklemmschutzsystems. Diese elektronische Auswerteeinheit weist eine zur Auswertung empfangener Messsignale geeignete Auswertelogik auf und ist beispielsweise in einem Steuergerät integriert.

Für die kapazitive Detektion eines Einklemmfalles weist ein Einklemmschutzsystem bevorzugt wenigstens zwei Sensorelektroden und zwei Empfangselektroden an dem Fahrzeugschließelement auf, wobei durch Ansteuerung der Sendeelektroden mit elektrischem Wechselstrom ein elektrisches Feld erzeugt wird, das durch ein Hindernis derart beeinflusst wird, dass eine elektrische Kapazität messbar verändert wird. Über eine elektronische Auswerteeinheit des Einklemmschutzsystems ist dann ein über eine Empfangselektrode empfangenes Signal dahingehend auswertbar, ob sich durch ein Hindernis im Verstellweg des Fahrzeugschließelements eine elektrische Kapazität geändert hat und dementsprechend die Verstellbewegung des Fahrzeugschließelements zumindest zu stoppen ist.

Vorzugsweise sind die im Bereich eines Verriegelungsteils vorgesehenen Elektroden innerhalb eines Gehäuses oder einer Abdeckung des Verriegelungsteils angeordnet. Hier kann beispielsweise vorgesehen sein, dass wenigstens eine Elektrode in ein solches Gehäuse oder eine solche Abdeckung aus Kunststoff eingebettet, insbesondere eingegossen ist oder hierin - beispielsweise durch Klebung - verlegt ist.

Beispielsweise können eine Sendeelektrode eines ersten Elektrodenpaares und eine Empfangselektrode eines zweiten Elektrodenpaares sowie eine Sendeelektrode des zweiten Elektrodenpaares und eine Empfangselektrode des ersten Elektrodenpaares (kreuzweise) nacheinander miteinander verschaltet werden, um ein Hindernis in dem zusätzlichen dritten Überwachungsbereich detektieren zu können, indem das Verriegelungsteil an dem Fahrzeugschließelement angeordnet ist. Eine derartige Verschaltung zweier Elektrodenpaare kann beispielsweise mittels eines Zeitmultiplexers gesteuert werden. Hierdurch kann eine elektronische Auswerteeinheit des Einklemmschutzsystems nacheinander in einer vorgegebenen Reihenfolge Signale auswerten, die für den jeweiligen Überwachungsbereich repräsentativ sind und anhand derer eine Kapazitätsänderung feststellbar ist. Bei einem derartigen Signal handelt es sich beispielsweise um ein an der Empfangselektrode jeweils messbares Spannungssignal, das sich durch ein Hindernis und die damit einhergehende Kapazitätsänderung verändert.

Eine Verschaltung wenigstens zweier Elektrodenpaare, so dass sie zusätzlich einen dritten Überwachungsbereich abdecken, in dem das Verriegelungsteil liegt, hat den Vorteil, dass einerseits keine zusätzliche Elektrode im Bereich des Verriegelungsteil vorgesehen werden muss und andererseits die Empfindlichkeit gegenüber Störungen reduziert ist. So kann sich das Problem stellen, dass eine kapazitive Hinderniserkennung im Bereich eines metallischen Verriegelungsteils nicht ohne Weiteres möglich ist. Zum einen ergibt sich eine größere Grundkapazität und zum anderen gegebenenfalls eine nicht unerhebliche Beeinflussung des elektrischen Feldes. Werden nun wenigstens eine Sendeelektrode und wenigstens eine Empfangselektrode miteinander verschaltet, die sich vorzugsweise auf verschiedenen Seiten des Verriegelungsteils an dem Fahrzeugschließelement entlang erstrecken, jedoch nicht an dem Verriegelungsteil selbst, können diese Nachteile zumindest minimiert werden und eine zuverlässige Kollisionsüberwachung für das Verriegelungsteil bereitgestellt werden, ohne dass hierfür zusätzliche Elektroden vorgesehen werden müssten.

Ein weiterer Aspekt der vorliegenden Erfindung ist die Bereitstellung eines kapazitiven Einklemmschutzsystems nach dem Anspruch 9.

Mittels dieses Einklemmschutzsystems ist ein Hindernis im Verstellweg eines fremdkraftbetätigt zu schließenden Fahrzeugschließelements detektierbar, um zu verhindern, dass ein Hindernis zwischen dem sich schließenden Fahrzeugsschließelement und einer Fahrzeugstruktur im Bereich einer Karosserieöffnung, die durch das Fahrzeugschließelement in einer Schließposition geschlossen ist, eingeklemmt wird. Ein kapazitives Einklemmschutzsystem umfasst dabei wenigstens das Folgende:
- wenigstens ein Elektrodenpaar mit einer Sendeelektrode und einer Empfangselektrode, wobei durch Ansteuerung der Sendeelektrode mit elektrischem Wechselstrom ein elektrisches Feld erzeugt wird, das durch ein Hindernis derart beeinflusst wird, dass eine elektrische Kapazität messbar verändert wird, und
- eine elektronische Auswerteeinheit, mittels der ein über eine Empfangselektrode empfangenes Signal dahingehend auswertbar ist, ob sich durch ein Hindernis im Verstellweg des Fahrzeugschließelements eine elektrische Kapazität geändert hat, so dass eine Verstellbewegung des Fahrzeugschließelements verändert werden, insbesondere gestoppt und/oder reversiert werden muss.

Zusätzlich zu dieser an sich bekannten Funktion eines kapazitiven Einklemmschutzsystem ist ein erfindungsgemäßes Einklemmschutzsystem ferner noch dazu eingerichtet und vorgesehen, auch ein Hindernis in einem Überwachungsbereich um ein Verriegelungsteil an dem Fahrzeugschließelement zu detektieren, um wenigstens beim Schließen eines Fahrzeugschließelements eine Kollision dieses Verriegelungsteils mit einem Hindernis, wie zum Beispiel dem Kopf einer Person, zu verhindern.

In einer ersten erfindungsgemäßen Ausführungsvariante des Einklemmschutzsystems weist das Fahrzeugschließelement mindestens drei zueinander unterschiedliche Schließkanten auf, über die das Fahrzeugschließelement in seiner Schließposition jeweils an der Fahrzeugstruktur anliegt, wobei das Verriegelungsteil an einer der Schließkanten vorgesehen ist. Dabei sind mindestens zwei Elektrodenpaare des Einklemmschutzsystems mit jeweils einer Sendeelektrode und einer Empfangselektrode vorgesehen, die sich jeweils über wenigstens einen Teil zweier Schließkanten derart erstrecken, dass mit jedem Elektrodenpaar anhand einer sich durch ein Hindernis ändernden elektrischen Kapazität sowohl eine Einklemmsituation an mindestens einer der Schließkanten als auch eine bevorstehende Kollision des Verriegelungsteils mit einem Hindernis detektierbar sind.

In einer zweiten erfindungsgemäßen Ausführungsvariante weist das Einklemmschutzsystem ein erstes und ein zweites Elektrodenpaar auf, wobei das erste Elektrodenpaar mit einer ersten Sendeelektrode und einer ersten Empfangselektrode zur Erzeugung eines ersten elektrischen Feldes in einem ersten Überwachungsbereich vorgesehen ist, das zweite Elektrodenpaar mit einer zweiten Sendeelektrode und einer zweiten Empfangselektrode zur Erzeugung eines elektrischen Feldes in einem zweiten Überwachungsbereich vorgesehen ist. Die beiden Elektrodenpaare sind dabei so angeordnet und werden untereinander verschaltet, dass mittels der Elektrodenpaare eine Kapazitätsänderung durch ein Hindernis in einem zu den ersten und zweiten Überwachungsbereichen unterschiedlichen dritten Überwachungsbereich detektierbar ist, in dem das Verriegelungsteil liegt. Die beiden Elektrodenpaare sind zueinander beabstandet auf unterschiedlichen Seiten des Verriegelungsteils angeordnet und der dritte Überwachungsbereich erstreckt sich im Wesentlichen zwischen den beiden Elektrodenpaaren.

Ein erfindungsgemäßes kapazitives Einklemmschutzsystem eignet sich somit insbesondere zur Durchführung eines erfindungsgemäßen Verfahrens. Die im Zusammenhang mit einem erfindungsgemäßen Verfahren erläuterten Vorteile und Merkmale gelten folglich auch für ein erfindungsgemäßes Einklemmschutzsystem und umgekehrt.

An einem erfindungsgemäßen Einklemmschutzsystem sind somit Mittel vorgesehen, um ein Hindernis in einem Überwachungsbereich um das Verriegelungsteil, zum Beispiel ein Schloss detektieren zu können, so dass durch das Einklemmschutzsystem ein von dem Vorliegen eines Einklemmfalles unabhängig arbeitender Kollisionsschutz bereitgestellt ist. Wie obig bereits erläutert, sind die Elektrodenpaare so ausgebildet, dass hierüber zusätzlich zu Detektion eines Einklemmfalls auch ein Hindernis in einem Überwachungsbereich um das Verriegelungsteil detektierbar ist.

So können diese Elektrodenpaare beispielsweise so an dem Fahrzeugschließelement angeordnet sein, dass sich die erzeugten elektrischen Felder der Elektrodenpaare überlappen und damit auch den Bereich um das Verriegelungsteil abdecken, so dass hier ein Hindernis detektierbar ist. Alternativ kann eine entsprechende Verschaltung zweier Elektrodenpaare, vorzugsweise im Zeitmultiplex, vorgesehen sein, durch die mittels der beiden Elektrodenpaare ein zusätzlicher dritter Überwachungsbereich für das Verriegelungsteil auswertbar ist.

Darüber hinaus sei darauf verwiesen, dass unter einem motorisch angetriebenen Verstellen eines Fahrzeugschließelements jedes fremdkraftbetätigte Verstellen verstanden wird, also insbesondere die Verstellung mittels eines Elektromotors, Hydraulikmotors und/oder Pneumatikmotors.

Weitere Vorteile und Merkmale der vorliegenden Erfindung werden bei der nachfolgenden Beschreibung von Ausführungsbeispielen anhand der Figuren deutlich werden.

Hierbei zeigen:
- Figur 1: schematisch eine Ausführungsvariante eines nicht erfindungsgemäßen Einklemmschutzsystem für ein Fahrzeugschließelement in Form einer Kraftfahrzeug-Heckklappe, bei der ein zusätzliches Elektrodenpaar im Bereich eines als Heckklappenschloss ausgebildeten Verriegelungsteils vorgesehen ist, um einen zusätzlichen elektronischen Kollisionsschutz bereitzustellen;
- Figur 2A: mit in Figur 1 übereinstimmender Ansicht eine erfindungsgemäße Ausführungsvariante, bei der bis in den Schlossbereich verlängerte Elektroden für den Kollisionsschutz vorgesehen sind;
- Figur 2B: eine Weiterbildung der Ausführungsvariante der Figur 2A mit einer schematisch dargestellten Abschirmung eines Elektrodenpaares in einem Teilbereich einer unteren Schließkante;
- Figur 3: schematisch den Aufbau eines Einklemmschutzsystems gemäß der Figuren 2A und 2B mit einer Verschaltung zweier Elektrodenpaare im Zeitmultiplex, um den Schlossbereich gezielt auf ein Hindernis zu überwachen;
- Figur 4: in mit der Figur 3 übereinstimmender Ansicht den Aufbau eines Einklemmschutzsystems nach dem Stand der Technik.

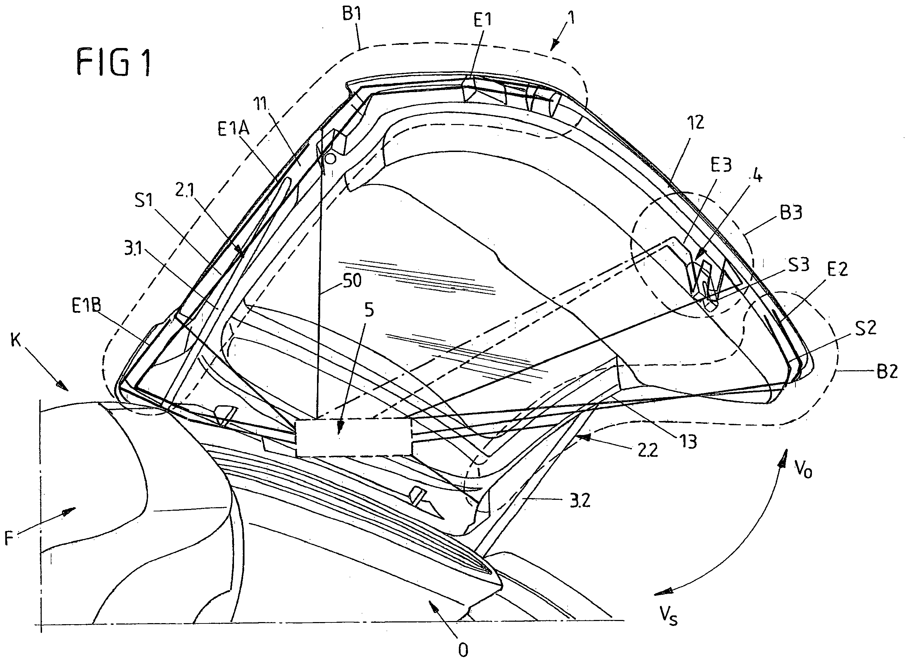

In der Figur 1 ist ausschnittsweise ein Kraftfahrzeug K mit motorisch verstellbarer Heckklappe 1 dargestellt. Die Heckklappe 1 verschließt dabei in einer Schließposition, in der die Heckklappe 1 vollständig geschlossen ist, eine Karosserieöffnung O am Heck des Kraftfahrzeugs K, über die ein Laderaum des Kraftfahrzeugs K zugänglich ist. Die Heckklappe 1 ist dabei über eine Antriebseinheit 2.1, 2.2 automatisch aus einer geöffneten Position in eine Schließposition entlang einer Verstellrichtung Vs verstellbar. Vorliegend sind zur symmetrischen Verstellung der Heckklappe 1 zwei Antriebseinheiten 2.1 und 2.2 vorgesehen, die jeweils an einer Längsseite der Heckklappe also rechts oder links, an der Heckklappe 1 angreifen. Jede dieser Antriebseinheiten 2.1, 2.2 verfügt über einen Antriebsmotor 3.1, 3.2. Die beiden Antriebsmotoren 3.1, 3.2 sind hierbei über eine elektronische Steuereinrichtung steuerbar, um die Heckklappe 1 entlang der Verstellrichtung Vs in ihre Schließposition zu verstellen. In einer Ausführungsvariante kann zudem vorgesehen sein, dass die Antriebseinheiten 2.1, 2.2 mit ihren Antriebsmotoren 3.1, 3.2 auch dazu in der Lage sind, die an der Karosserie des Kraftfahrzeugs angelenkte Heckklappe 1 entlang einer entgegengesetzten Verstellrichtung V_{O} in eine abgeklappte und damit geöffnete Position zu verstellen.

Wesentlich ist jedoch im vorliegenden Fall, dass das Kraftfahrzeug K und insbesondere die Heckklappe 1 mit einem kapazitiven Einklemmschutzsystem ausgestattet ist, um beim Schließen der Heckklappe 1 eine Verstellbewegung der Heckklappe 1 automatisch stoppen und/oder reversieren zu können, falls zwischen einer Schließkante 11, 12, 13 der Heckklappe 1 und einer die Karosserieöffnung O berandenden Fahrzeugstruktur F ein Hindernis (nicht dargestellt) eingeklemmt würde. So besteht bei einer motorisch verschließbaren Heckklappe 1, wie auch bei anderen Fahrzeugschließelementen, zum Beispiel in Form von Fensterscheiben, Seitentüren oder Schiebedächern die Gefahr, dass insbesondere ein Körperteil einer Person eingeklemmt wird, was zu erheblichen Verletzungen führen kann. Über ein mit kapazitiver Sensorik arbeitendes Einklemmschutzsystem soll hierbei nun berührungslos ein mögliches Hindernis im Verstellweg des Fahrzeugschließelements, hier der Heckklappe 1, möglichst frühzeitig detektiert werden, um ein Einklemmen des jeweiligen Hindernisses zu verhindern. Ein solches kapazitives Einklemmschutzsystem kann dabei selbstverständlich auch durch zusätzliche Sensoren ergänzt sein, die beispielsweise das Einklemmen eines Hindernisses taktil detektieren.

Im vorliegenden Fall weist das Einklemmschutzsystem zwei längserstreckte Sendeelektroden S1, S2 sowie mehrere längserstreckte Empfangselektroden auf, von denen in den Figuren die Empfangselektroden E1, E1A, E1B und E2 ersichtlich sind. Die Empfangselektroden bilde mit je einer zugeordneten Sendeelektrode ein Elektrodenpaar z.B. zwei Elektrodenpaaren S1, E1 und S2, E2. Weder die Sendeelektroden S1, S2 noch die Empfangselektroden E1, E2 sind miteinander verbunden, sondern weisen jeweils einen Abstand zueinander auf. Die beiden Elektroden S1, S2 bzw. E1, E2 sind somit voneinander separiert und räumlich zueinander beabstandet.

Die Sendeelektroden S1, S2 erstrecken sich dabei vornehmlich über eine längsseitige Schließkante 11 oder 13 und nur geringfügig auch über die die längseitigen Schließkanten 11, 13 verbindende quer laufende Schließkante 12 der Heckklappe 1, die im geschlossenen Zustand an der Fahrzeugstruktur F im Bereich eines Stoßfängers des Kraftfahrzeugs K anliegt und die mittig ein zur Verriegelung der Heckklappe 1 vorgesehenes Verriegelungsteil in Form eines Schlosses 4 aufweist. Die beiden Sendeelektroden S1 und S2 verlaufen jeweils nahezu vollständig an einer der längsseitigen Schließkanten 11 bzw. 13 entlang. Die Empfangselektrode E2 verläuft vorliegend an der (rechten) Schließkante 13, während die Empfangselektroden E1, E1A, E1B hintereinander an der gegenüberliegenden (linken) Schließkante 11 verlaufen. Anhand der Figur 1 soll dabei insbesondere exemplarisch veranschaulicht werden, dass anstelle einer einzelnen durchgängigen Empfangselektrode für eine Schließkante 11, 12 auch mehrere Empfangselektroden E1, E1A, E1B mit einer einzelnen Sendeelektrode S1 kombiniert werden können, wenn z. B. die Verlegung eines durchgängigen Empfangselektrode bauraumbedingt erschwert ist.

Sowohl die Sendeelektroden S1, S2 wie auch die Empfangselektroden E1, E2 verlaufen vorzugsweise an oder innerhalb der Heckklappe 1, das heißt beispielsweise, unterhalb einer schützenden Kunststoffabdeckung oder einer die Elektroden umhüllenden Dichtung.

Um ein Hindernis im Verstellweg der Heckklappe 1 beim Schließen detektieren zu können, und somit ein Einklemmen des Hindernisses effektiv zu verhindern, werden die beiden Sendeelektroden S1, S2 mit elektrischem Wechselstrom angesteuert. Hierdurch wird jeweils ein elektrisches Feld in einem Überwachungsbereich B1, B3 erzeugt, das durch ein Hindernis derart beeinflusst wird, dass eine elektrische Kapazität messbar verändert wird. Eine Änderung der elektrischen Kapazität ist hierbei dann über die jeweils zugeordnete Empfangselektrode E1, E1A, E1B (für den Überwachungsbereich B1 an der Schließkante 11) und E2 (für den Überwachungsbereich B3 an der Schließkante B3) erfassbar, so dass über eine elektronische Auswerteeinheit 5, die elektrisch über Signalleitungen 50 mit den Empfangselektroden E1, E1A, E1B und E2 verbunden ist, mittels einer Auswertelogik automatisch ausgewertet werden kann, ob ein Hindernis in einem Überwachungsbereich B1, B3 der jeweiligen Sendeelektrode S1, S2 im Verstellweg der Heckklappe 1 vorliegt.

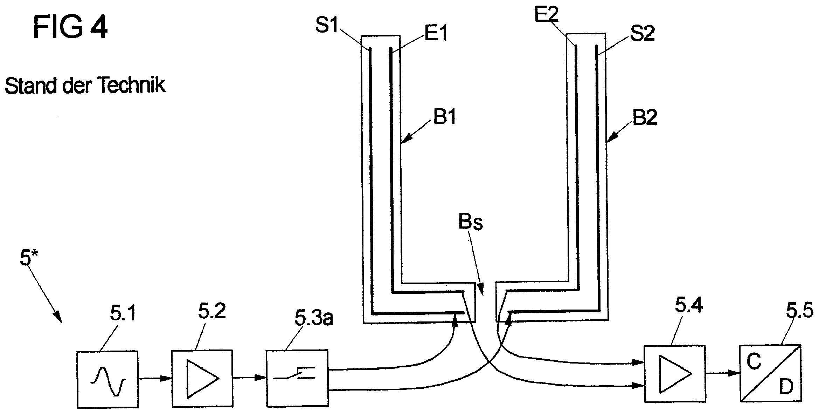

Die Figur 4 zeigt schematisch den Aufbau eines aus dem Stand der Technik bekannten Einklemmschutzsystems mit einer elektronischen Auswerteeinheit 5*. Diese elektronische Auswerteeinheit 5* umfasst hierbei nicht nur mit einer Empfangselektrode E1 verbundene Komponenten, wie einen Empfangsverstärker 5.4 und eine Auswerteschaltung 5.5 (mit integrierter Auswertelogik oder mit Kopplung an eine Auswertelogik), über die ein über die Empfangselektrode E1 empfangendes Spannungssignal verstärkt und ausgewertet werden kann, um das Auftreten eines Hindernisses im Verstellweg der Heckklappe 1 festzustellen. Vielmehr werden in der vorliegenden Ausführungsvariante auch mit den Sendeelektroden S1, S2 in Verbindung stehende Komponenten der elektronischen Auswerteeinheit 5* zugerechnet. Bei diesen mit den Sendeelektroden S1, S2 in Verbindung stehenden Komponenten, die die Ansteuerung der Sendeelektroden S1, S2 mit elektrischem Wechselstrom realisieren, handelt es sich um einen Signalerzeuger 5.1, einem diesem Signalerzeuger 5.1 nachgeschalteten Verstärker 5.2 und einen auf den Verstärker 5.2 folgenden Analogmultiplexer 5.3a.

Hierbei wird über den Signalerzeuger 5.1 Wechselstrom mit vorgegebener Amplitude und Frequenz erzeugt, der über den Verstärker 5.2 und den Analog-Multiplexer 5.3a zeitlich alternierend an die Sendeelektrode S1 oder die Sendeelektrode S2 weitergegeben wird. Über den dargestellten Aufbau mit einem Analog-Multiplexer 5.3a wird ein Wechselstrom mit vorgegebener Amplitude und Frequenz wahlweise an die (erste) Sendeelektrode S1 oder an die (zweite) Sendeelektrode S2 übertragen, so dass anhand nacheinander von der Auswerteschaltung 5.5 empfangener Signale bewertet werden kann, ob im Überwachungsbereich B1 der ersten Sendeelektrode S1 oder im Überwachungsbereich B3 der zweiten Sendeelektrode S2 eine Änderung der elektrischen Kapazität aufgetreten ist, die auf das Vorliegen eines Hindernisses im Verstellweg der Heckklappe 1 schließen lässt. Es wird also hier eine Messung mehrerer Sensorkanäle im Zeitmultiplex realisiert, um ortsaufgelöst bestimmen zu können, in welchem der durch jeweils eine Sendeelektrode S1, S2 definierten Überwachungsbereiche B1, B3 an der Heckklappe 1 die Kollision mit einem Hindernis auftritt, wenn die Verstellbewegung der Heckklappe 1 nicht gestoppt und/oder reversiert wird.

Die eigentliche Auswertung erfolgt jeweils insbesondere mithilfe der Auswerteschaltung 5.5 der Auswerteeinheit 5*, wie im Übrigen auch bei der Auswerteeinheit 5. Dabei werden über die Auswerteschaltung 5.5 aus einem empfangenen Spannungssignal ein Kapazitätssignal oder mehrere Kapazitätssignale, die jeweils für eine Sendeelektrode S1, S2 repräsentativ sind, gewonnen und das jeweilige Kapazitätssignal in ein digitales Signal konvertiert, um hierüber das Stoppen und/oder Reversieren der Verstellbewegung der Heckklappe 1 zu steuern. Die Auswerteeinheit 5, 5* ist dabei jeweils Teil eines in dem Kraftfahrzeug K untergebrachten Steuergeräts.

Das Einklemmschutzsystem mit einer Auswerteeinheit 5* gemäß dem Stand der Technik sieht eine Überwachung an der unteren, quer verlaufenden Schließkante 12 mit dem Schloss 4 nicht vor. Es ist vielmehr ein nicht überwachter Bereich Bₛ vorgesehen, in dem das Auftreten eines Hindernisses nicht durch das Einklemmschutzsystem detektierbar ist. So fokussiert sich bisher die Erkennung eines Einklemmfalls auf die längs verlaufenden seitlichen Schließkanten 11, 13; dies insbesondere, da aufgrund metallischer Werkstoffe im Schlossbereich des Schlosses 4 und seines Gegenstücks an dem Kraftfahrzeug K eine zuverlässige Erkennung eines Einklemmfalls nicht ohne weiteres möglich ist.

Unabhängig von einem Einklemmfall besteht aber durch das an der unteren Schließkante 12 der Heckklappe 1 vorstehende Schloss 4 ein Verletzungsrisiko, da das Schloss 4 beim Schließen der Heckklappe 1 leicht mit einer Person, z. B. an deren Kopf, kollidieren kann. Genau hier setzt die vorliegende Erfindung an und kombiniert ein kapazitives Einklemmschutzsystem mit einem Kollisionsschutz für ein Verriegelungsteil, hier in Form des Schlosses 4, das an einem Fahrzeugschließelement wie der Heckklappe 1 angeordnet ist.

Bei der nicht erfindungsgemäßen Ausführungsvariante der Figur 1 ist hierfür ein zusätzliches Elektrodenpaar mit einer Sendeelektrode S3 und einer Empfangselektrode E3 im Bereich des Schlosses 4 vorgesehen. Die Sendeelektrode S3 und die Empfangselektrode E3 sind dabei beispielsweise in einem Gehäuse oder einer Abdeckung des Schlosses 4 untergebracht, insbesondere in ein Kunststoffmaterial des Gehäuses bzw. der Abdeckung eingebettet. Über das Elektrodenpaar S3, E3 wird - ebenfalls kapazitiv - ein Hindernis in einem Überwachungsbereich B3 um das Schloss 4 detektiert. Dabei erzeugt auch hier die Sendeelektrode S3 ein elektrisches Feld in einem Überwachungsbereich B3, so dass ein etwaiges Hindernis, z. B. eine Person, eine an der Empfangselektrode E3 messbare Kapazitätsänderung mit sich bringt.

Da das Steuergerät bzw. die Auswerteeinheit 5 des kapazitiven Einklemmschutzsystems ohnehin dazu ausgebildet und vorgesehen ist, etwaige Kapazitätsänderungen anhand von den Empfangselektroden E1, E1A, E1B und E2 empfangener Spannungssignale festzustellen, kann die Auswerteeinheit 5 auch ohne weiteres dazu genutzt werden, ein Spannungssignal der Empfangselektrode E3 für den Schlossbereich auszuwerten. Dementsprechend kann über die elektronische Auswerteeinheit 5 beim Schließen der Heckklappe 1 eine bevorstehende Kollision des Schlosses 4 mit einem Hindernis festgestellt und die motorischen Antriebseinheiten 2.1, 2.2 zu einem Stoppen und/oder Reversieren der Verstellbewegung der Heckklappe 1 veranlasst werden, um die Kollision zu vermeiden.

Für die Kopplung des zusätzlichen Elektrodenpaares S3, E3 können an der Auswerteeinheit 5 separate Ein- und Ausgänge vorgesehen sein. Alternativ ist es aber auch möglich, die Sendeelektrode S3 mit einer der anderen Sendeelektroden S1, S2 parallel zu schalten, so dass diese gleichzeitig mit elektrischem Wechselstrom angesteuert werden. Diese Möglichkeiten sind in der Darstellung der Figur 1 durch gestrichelte Linien dargestellt.

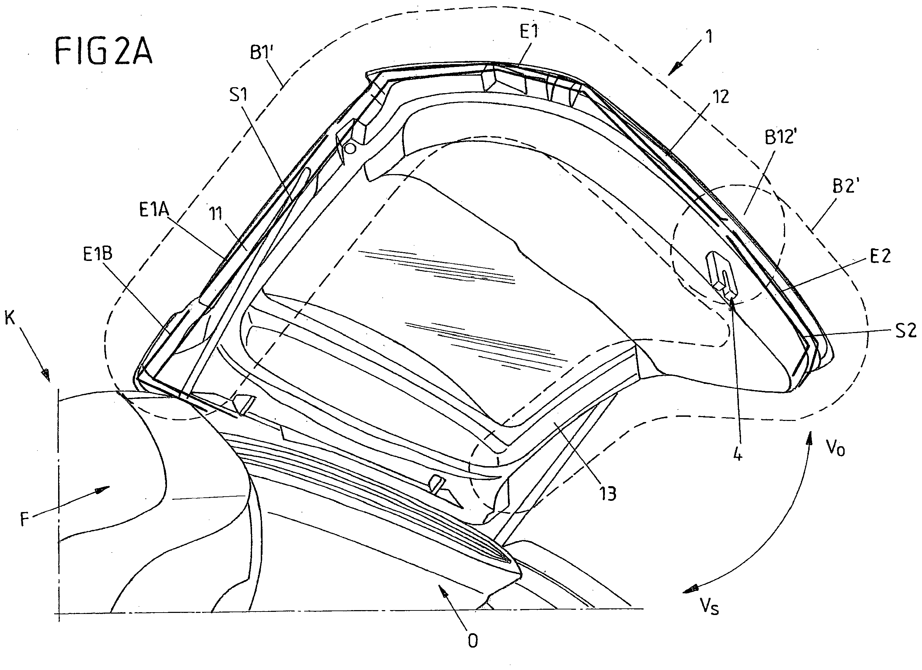

Bei der erfindungsgemäßen Ausführungsvariante der Figur 2A werden zur Bereitstellung eines Kollisionsschutzes keine zusätzlichen Sende- und Empfangselektroden S3, E3 vorgesehen, sondern für die Erkennung eines Einklemmfalls bereits vorgesehenen Sende- und Empfangselektroden S1, S2, E1, E2 genutzt. Dabei sind die Sende- und Empfangselektroden S1, S2, E1 und E2, die sich jeweils an einer der längsseitigen Schließkanten 11, 13 entlang erstrecken gegenüber der Ausführungsvariante der Figur 1 verlängert ausgeführt, so dass sie sich auch an der unteren quer verlaufenden Schließkante 12 der Heckklappe 1 erstrecken. Ein Elektrodenpaar S1, E1 bzw. S2, E2 verläuft dabei jeweils bis etwa zur Mitte der unteren Schließkante 12 bis zu einem Abschnitt an der unteren Schließkante 12, an dem das Schloss 4 angeordnet ist.

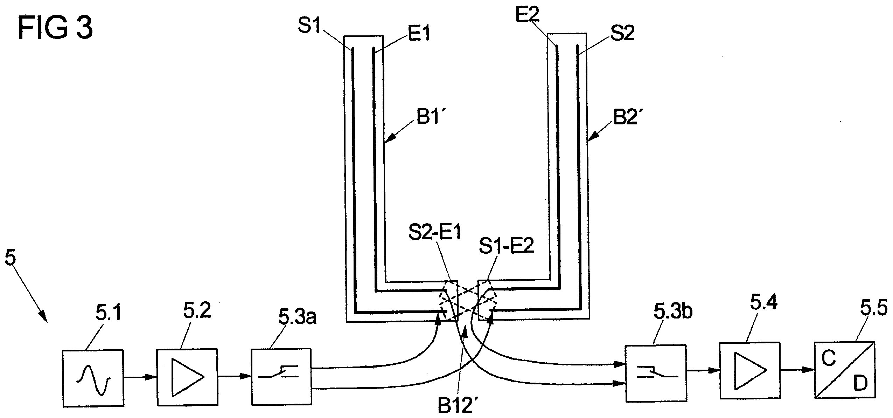

Durch die Verlängerung der Elektroden S1, S2, E1, E2 bis in den Schlossbereich an der unteren Schließkante 12 deckt ein Überwachungsbereich B1' bzw. B2' bei Ansteuerung der jeweiligen Sendeelektrode S1, S2 auch den Bereich um das Schloss 4 ab, so dass ein Hindernis in der Nähe des Schlosses 4 anhand einer Kapazitätsänderung feststellbar ist. Dabei können die beiden Elektrodenpaare S1, E1 und S2, E2 auch so zueinander angeordnet sein, dass sich die jeweils von ihnen abgedeckten Überwachungsbereiche B1' und B2' im Bereich des Schlosses 4 überlappen, so dass ein durch die beiden Elektrodenpaare S1, E1 und S2, E2 definierter Schlossüberwachungsbereich B12' entsteht. Dieser Schlossüberwachungsbereich B12' kann ferner auch durch eine intelligente Verschaltung der beiden Elektrodenpaare S1, E1 und S2, E2 miteinander realisiert sein, wie nachfolgend noch ausführlich im Zusammenhang mit der Figur 3 erläutert werden wird.

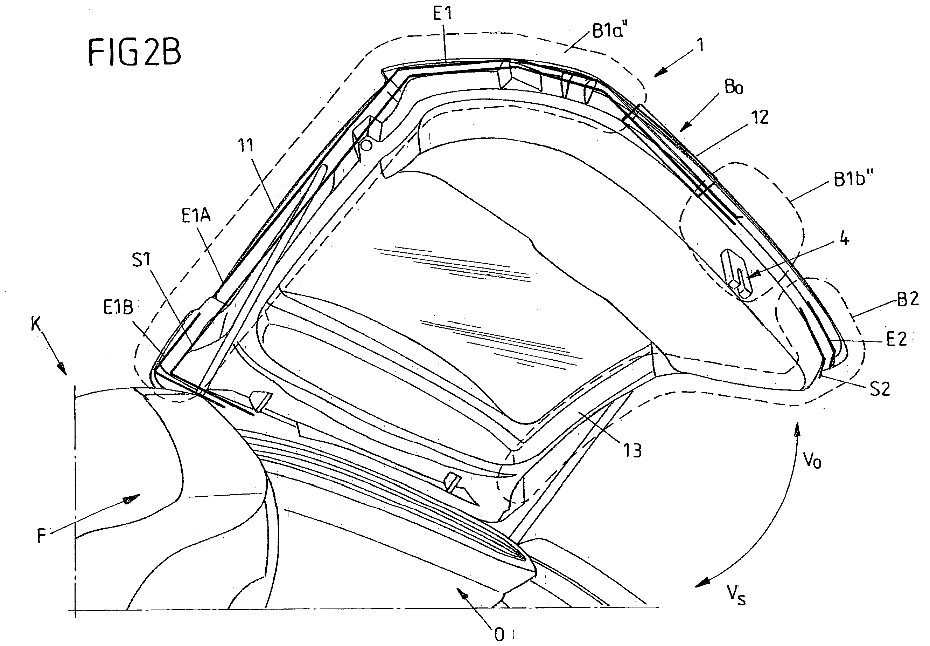

Mit der Figur 2B wird noch eine mögliche Weiterbildung der Ausführungsvariante der Figur 2A veranschaulicht. Hierbei ist ein Abschnitt an der unteren Schließkante 12, an dem sich die Sendeelektrode S1 und die Empfangselektrode E1 entlang erstrecken teilweise mit einer Abschirmung versehen. Durch diese Abschirmung ergibt sich entlang der Erstreckung der beiden Elektroden S1, E1 eines Elektrodenpaares ein abgeschirmter Bereich B₀, in dem keine Hinderniserkennung möglich ist.

Vorliegend unterteilt die Abschirmung an der unteren Schließkante 12 einen von den Empfangselektroden E1, E1A und E1B und der einen Sendeelektrode S1 abgedeckten Überwachungsbereich in zwei Überwachungsteilbereiche B1a" und B1b". Dabei sind die Abschirmung an der unteren Schließkante 12, die Sendeelektrode S1 und die Empfangselektrode E1 so dimensioniert und angeordnet, dass der eine Überwachungsteilbereich B1b" immer noch den Schlossbereich um das Schloss 4 abdeckt. Dabei ist bei der Ausführungsvariante der Figur 2B lediglich eines der Elektrodenpaare, nämlich das Elektrodenpaar S1, E1, bis in den Schlossbereich verlängert, um hierüber zusätzlich einen kapazitiv arbeitenden Kollisionsschutz bereitzustellen. Dementsprechend ist hier lediglich ein Elektrodenpaar so ausgeführt, dass hierüber auch ein Hindernis in dem Überwachungsteilbereich B1b" um das Schloss 4 detektierbar ist, um einer Kollision des Schlosses 4 mit einer Person entgegenzuwirken.

So ist mit Hilfe eines Elektrodenpaares S1, E1 (gegebenenfalls, wie nachfolgend erläutert zusammen mit einem weiteren Elektrodenpaar S2, E2) eine kapazitive Überwachung eines Schlossbereiches um das Schloss 4 bereitgestellt, indem die Elektroden S1, E1 dieses Elektrodenpaares bis in den Schlossbereich an der unteren Schließkante 12 verlängert sind und obwohl in einem (Groß-) Teil der unteren Schließkante 12 eine Abschirmung vorgesehen ist. Eine solche Abschirmung kann beispielsweise angeraten sein, wenn ansonsten Störungseinflüsse, beispielsweise durch die Fahrzeugstruktur F oder hieran vorgesehene Komponenten, im Bereich der unteren Schließkante 12 zu stark zunehmen würden.

Alternativ oder ergänzend kann das teilweise abgeschirmte Elektrodenpaar S1, E1 mit einem ebenfalls bis in den Schlossbereich verlängertem benachbarten Elektrodenpaar S2, E2 gemäß der Figur 1 kombiniert sein. Hiermit ist eine Verschaltung mit dem anderen, benachbarten Elektrodenpaar S2, E2 für eine Kollisionserkennung um das Schloss 4 möglich ist.

Mit der Figur 3 wird ein möglicher Aufbau der Auswerteeinheit 5 veranschaulicht, um anhand eines intelligenten Verschaltens zweier Elektrodenpaare S1, E1 und S2, E2 eine Kollisionsüberwachung in dem Schlossüberwachungsbereich B12' bereitzustellen. Dies kann beispielsweise vorteilhaft sein, um eine erhöhte Grundkapazität zu vermeiden und das System weniger anfällig für etwaige Störungen zu machen.

Dabei ist im Unterschied zu einer aus dem Stand der Technik gemäß der Figur 4 bekannten Auswerteeinheit 5* bei einer erfindungsgemäß ausgebildeten Variante ein zweiter Analogmultiplexer 5.3b empfängerseitig vorgesehen, um die Elektrodenpaare S1, E1 und S2, E2 nicht nur im Zeitmultiplex ansteuern, sondern auch auswerten zu können. Hierdurch ist die Auswerteeinheit 5 dazu in der Lage, die einzelnen Empfangselektroden E1 und E2 im Zeitmultiplex durchzuschalten. So kann beispielsweise zunächst die erste Sendeelektrode S1 angesteuert werden und nacheinander das hierdurch an der zugehörigen ersten Empfangselektrode E1 anfallende Spannungssignal und anschließend das an der anderen zweiten Empfangselektrode E2 anfallende Spannungssignal ausgewertet werden, indem durch den Analogmultiplexer 5.3b zwischen den beiden Empfangselektroden E1 und E2 geschaltet wird. Anschließend wird mit Hilfe des sendeseitigen Analogmultiplexers 5.3a die zweite Sendeelektrode S2 angesteuert und hierbei das von der zugehörigen zweiten Empfangselektrode E2 empfangene Spannungssignal ausgewertet. Anschließend kann mit Hilfe des empfängerseitigen Analogmultiplexers 5.3b bei weiterer aufrechterhaltener Ansteuerung der zweiten Sendeelektrode S2 das Spannungssignal an der ersten Empfangselektrode E1 ausgewertet werden. Durch die sich hierbei ergebende Kreuzverschaltung der beiden vorzugsweise im Wesentlichen symmetrisch zueinander aufgebauten Elektrodenpaare S1, E1 und S2, E2 wird auch ein Bereich um das Schloss 4 kapazitiv auf das Vorliegen eines Hindernisses überwacht. Der sich ergebende Schlossüberwachungsbereich B12' deckt folglich nicht nur das Schloss 4, sondern auch einen Bereich um das Schloss 4 herum ab, so dass anhand der Spannungssignale der Empfangselektroden E1, E2 auf ein etwaiges Hindernis in der Nähe des Schlosses 4 geschlossen werden kann.

Obwohl die beiden Elektrodenpaare S1, E1 und S2, E2 hier nicht bis an das Schloss 4 herangeführt sind, sondern das Schloss 4 zwischen den Enden der jeweiligen Elektroden S1, E1, S2, E2 liegt, kann durch die gezeigte Verschaltung der auf unterschiedlichen Seiten des Schlosses 4 angeordneten Elektrodenpaare S1, E1 und S2, E2 eine zusätzliche Überwachung des Schlossbereiches bereitgestellt werden. Zwar wäre es auch grundsätzlich möglich, lediglich bei Ansteuerung der einzelnen ersten Sendeelektrode S1 nacheinander die Empfangselektrode E1 auf der ersten (linken) Seite bezüglich des Schlosses 4 und anschließend die andere Empfangselektrode E2 auf der anderen (rechten) Seite des Schlosses 4 auszuwerten, um zusätzlich zu einem Einklemmfall auch eine bevorstehende Kollision des Schlosses 4 mit einem Hindernis, insbesondere einer Person berührungslos feststellen zu können. Durch die kreuzweise Verschaltung mit zeitlich nacheinander erfolgender Ansteuerung beider Sendeelektroden und Auswertung beider Empfangselektroden über das Schloss 4 hinweg, kann jedoch zuverlässiger auf ein Hindernis im Schlossbereich geschlossen werden.

Obwohl die in den Figuren dargestellten jeweils eine Heckklappe 1 zeigen, kann die vorliegende Erfindung selbstverständlich auch bei anderen Fahrzeugschließelementen zum Einsatz kommen, wie z.B. einem Kofferraumdeckel.

### Bezugszeichenliste

- 1: Heckklappe
- 11, 12, 13: Schließkante
- 2.1, 2.2: Antriebseinheit
- 3.1, 3.2: Antriebsmotor
- 4: Schloss
- 5, 5*: Auswerteeinheit
- 5.1: Signalerzeuger
- 5.2: Verstärker
- 5.31, 5.32: Analogschalter
- 5.3a: Analogmultiplexer
- 5.3b: Analogmultiplexer
- 5.4: Empfangsverstärker
- 5.5: Auswerteschaltung
- 5.6: Phasenverschieber
- 50: Signalleitung
- B₀: Abgeschirmter Bereich
- B1, B1': 1. Überwachungsbereich
- B12': Schlossüberwachungsbereich
- B1a", B1b": Überwachungsteilbereich
- B2, B2': 2. Überwachungsbereich
- B3: Schlossüberwachungsbereich
- B_{S}: Nicht überwachter Bereich
- d₁, d₂: Abstand
- E1, E1A, E1B: Empfangselektrode
- E2, E3: Empfangselektrode
- F: Fahrzeugstruktur
- K: Kraftfahrzeug
- I: Länge der unteren Schließkante
- O: Karosserieöffnung
- S1, S2, S3: Sendeelektrode
- ST: Stoßfänger
- V_{S}, V_{O}: Verstellrichtung

## Patentansprüche

1. Verfahren zur Steuerung einer Verstellbewegung eines fremdkraftbetätigt zu schließenden Fahrzeugschließelements eines Fahrzeugs, wobei
- durch das Fahrzeugschließelement (1) in einer Schließposition eine Karosserieöffnung (O) des Fahrzeugs (K) verschließbar ist und das Fahrzeugsschließelement (1) ein Verriegelungsteil (4) aufweist, über das das Fahrzeugsschließelement (1) in der Schließposition verriegelbar ist, und
- mittels eines kapazitiven Einklemmschutzsystems ein Hindernis im Verstellweg des sich schließenden Fahrzeugschließelements (1) detektierbar ist, so dass mittels des Einklemmschutzsystems die Verstellbewegung des Fahrzeugschließelements (1) derart gesteuert werden kann, dass verhindert wird, dass ein Hindernis zwischen dem sich schließenden Fahrzeugsschließelement (1) und einer Fahrzeugstruktur (F) im Bereich der Karosserieöffnung (O) eingeklemmt wird,
- mittels des kapazitiven Einklemmschutzsystems auch ein Hindernis in einem Überwachungsbereich (B3, B12', B1b") um das an dem Fahrzeugschließelement (1) vorgesehene Verriegelungsteil (4) detektiert wird, um wenigstens beim Schließen des Fahrzeugschließelements (1) eine Kollision dieses Verriegelungsteils (4) mit einem Hindernis zu verhindern,
**dadurch gekennzeichnet, dass**
(a) das Fahrzeugschließelement (1) mindestens drei zueinander unterschiedliche Schließkanten (11, 12, 13) aufweist, über die das Fahrzeugschließelement (1) in seiner Schließposition jeweils an der Fahrzeugstruktur (F) anliegt, und das Verriegelungsteil (4) an einer (12) der Schließkanten (11, 12, 13) vorgesehen ist, wobei mindestens zwei Elektrodenpaare (S1, E1; S2, E2) des Einklemmschutzsystems mit jeweils einer Sendeelektrode (S1; S2) und einer Empfangselektrode (E1; E2) vorgesehen sind, die sich jeweils über wenigstens einen Teil zweier Schließkanten (11, 12; 12, 13) derart erstrecken, dass mit jedem Elektrodenpaar (S1, E1; S2, E2) anhand einer sich durch ein Hindernis ändernden elektrischen Kapazität sowohl eine Einklemmsituation an mindestens einer der Schließkanten (11, 12, 13) als auch eine bevorstehende Kollision des Verriegelungsteils (4) mit einem Hindernis detektierbar sind,
und/oder
(b) das Einklemmschutzsystem ein erstes und ein zweites Elektrodenpaar (S1, E1; S2, E2) aufweist, wobei
- das erste Elektrodenpaar (S1, E1) mit einer ersten Sendeelektrode (S1) und einer ersten Empfangselektrode (S2) zur Erzeugung eines ersten elektrischen Feld in einem ersten Überwachungsbereich (B1') vorgesehen ist,
- das zweite Elektrodenpaar (S2, E2) mit einer zweiten Sendeelektrode (S2) und einer zweiten Empfangselektrode (E2) zur Erzeugung eines elektrischen Feldes in einem zweiten Überwachungsbereich (B2') vorgesehen ist,
- die beiden Elektrodenpaare (S1, E1; S2, E2) so angeordnet sind und untereinander verschaltet werden, dass mittels der Elektrodenpaare (S1, E1; S2, E2) eine Kapazitätsänderung durch ein Hindernis in einem zu den ersten und zweiten Überwachungsbereichen (B1', B2') unterschiedlichen dritten Überwachungsbereich (B12') detektierbar ist, in dem das Verriegelungsteil (4) liegt, und
- die beiden Elektrodenpaare (S1, E1; S2, E2) zueinander beabstandet auf unterschiedlichen Seiten des Verriegelungsteils (4) angeordnet sind und sich der dritte Überwachungsbereich (B12') im Wesentlichen zwischen den beiden Elektrodenpaaren (S1, E1; S2, E2) erstreckt.

2. Verfahren nach Anspruch 1, **dadurch gekennzeichnet, dass** für die Detektion eines Hindernisses in dem Überwachungsbereich (B3, B12', B1b") eine Veränderung einer elektrischen Kapazität ausgewertet wird.

3. Verfahren nach einem der Ansprüche 1 oder 2, **dadurch gekennzeichnet, dass** sowohl die Auswertung, ob eine Einklemmsituation vorliegt, in der ein Hindernis eingeklemmt wird, als auch die Auswertung, ob eine Kollisionssituation vorliegt, in der das Verriegelungsteil (4) mit einem Hindernis kollidiert mittels der elektronischen Auswerteeinheit (5) des Einklemmschutzsystems vorgenommen wird.

4. Verfahren nach einem der vorhergehenden Ansprüche, **dadurch gekennzeichnet, dass** die beiden Elektrodenpaare (S1, E1; S2, E2) zueinander beabstandet auf unterschiedlichen Seiten des Verriegelungsteils (4) angeordnet sind und sich der dritte Überwachungsbereich (B12') zwischen den Enden der Elektroden (S1, E1, S2, E2) der Elektrodenpaare (S1, E1; S2, E2) erstreckt.

5. Verfahren nach einem der vorhergehenden Ansprüche, **dadurch gekennzeichnet, dass** die erste Sendeelektrode (S1) und die zweite Empfangelektrode (E2) und/oder die zweite Sendeelektrode (S2) und die erste Empfangselektrode (E1) miteinander verschaltet werden, um ein Hindernis in dem dritten Überwachungsbereich (B12') detektieren zu können.

6. Verfahren nach Anspruch 5, **dadurch gekennzeichnet, dass** die erste Sendeelektrode (S1) und die zweite Empfangelektrode (E2) und die zweite Sendeelektrode (S2) und die erste Empfangselektrode (E1) nacheinander miteinander verschaltet werden, um ein Hindernis in dem dritten Überwachungsbereich (B12') detektieren zu können.

7. Verfahren nach einem der vorhergehenden Ansprüche, **dadurch gekennzeichnet, dass** über die elektronische Auswerteeinheit (5) nacheinander in einer vorgegebenen Reihenfolgen mindestens ein für den ersten Überwachungsbereich (B1') repräsentatives Signal, mindestens ein für den zweiten Überwachungsbereich (B1') repräsentatives Signal und mindestens ein für den dritten Überwachungsbereich (B12') repräsentatives Signal ausgewertet wird.

8. Verfahren nach einem der vorhergehenden Ansprüche, **dadurch gekennzeichnet, dass** die Verschaltung der Elektrodenpaare (S1, E1; S2, E2) mittels eines Zeitmultiplexers gesteuert wird.

9. Kapazitives Einklemmschutzsystem für ein Fahrzeug, mittels dem ein Hindernis im Verstellweg eines fremdkraftbetätigt zu schließenden Fahrzeugschließelements detektierbar ist und mittels dem verhindert wird, dass ein Hindernis zwischen dem sich schließenden Fahrzeugsschließelement und einer Fahrzeugstruktur im Bereich einer Karosserieöffnung, die durch das Fahrzeugsschließelement in einer Schließposition verschlossen ist, eingeklemmt wird, wobei das Einklemmschutzsystem wenigstens das Folgende umfasst:
- wenigstens ein Elektrodenpaar mit einer Sendeelektrode (S1; S2) und einer Empfangselektrode (E1, E1A, E1B; E2), wobei durch Ansteuerung der Sendeelektrode (S1; S2) mit elektrischem Wechselstrom ein elektrisches Feld erzeugt wird, das durch ein Hindernis derart beeinflusst wird, dass eine elektrische Kapazität messbar verändert wird, und
- eine elektronische Auswerteeinheit (5), mittels der ein über eine Empfangselektrode (E1, E1A, E1B, E2) empfangenes Signal dahingehend auswertbar ist, ob sich durch ein Hindernis im Verstellweg des Fahrzeugschließelements (1) eine elektrische Kapazität geändert hat,
- das kapazitive Einklemmschutzsystem dazu eingerichtet und vorgesehen, auch ein Hindernis in einem Überwachungsbereich (B3, B12', B1b") um ein Verriegelungsteil (4) an dem Fahrzeugschließelement (1) zu detektieren, um wenigstens beim Schließen des Fahrzeugschließelements (1) eine Kollision dieses Verriegelungsteils (4) mit einem Hindernis zu verhindern,
**dadurch gekennzeichnet, dass**
(a) das Fahrzeugschließelement (1) mindestens drei zueinander unterschiedliche Schließkanten (11, 12, 13) aufweist, über die das Fahrzeugschließelement (1) in seiner Schließposition jeweils an der Fahrzeugstruktur (F) anliegt, und das Verriegelungsteil (4) an einer (12) der Schließkanten (11, 12, 13) vorgesehen ist, wobei mindestens zwei Elektrodenpaare (S1, E1; S2, E2) des Einklemmschutzsystems mit jeweils einer Sendeelektrode (S1; S2) und einer Empfangselektrode (E1; E2) vorgesehen sind, die sich jeweils über wenigstens einen Teil zweier Schließkanten (11, 12; 12, 13) derart erstrecken, dass mit jedem Elektrodenpaar (S1, E1; S2, E2) anhand einer sich durch ein Hindernis ändernden elektrischen Kapazität sowohl eine Einklemmsituation an mindestens einer der Schließkanten (11, 12, 13) als auch eine bevorstehende Kollision des Verriegelungsteils (4) mit einem Hindernis detektierbar sind,
und/oder
(b) das Einklemmschutzsystem ein erstes und ein zweites Elektrodenpaar (S1, E1; S2, E2) aufweist, wobei
- das erste Elektrodenpaar (S1, E1) mit einer ersten Sendeelektrode (S1) und einer ersten Empfangselektrode (S2) zur Erzeugung eines ersten elektrischen Feldes in einem ersten Überwachungsbereich (B1') vorgesehen ist,
- das zweite Elektrodenpaar (S2, E2) mit einer zweiten Sendeelektrode (S2) und einer zweiten Empfangselektrode (E2) zur Erzeugung eines elektrischen Feldes in einem zweiten Überwachungsbereich (B2') vorgesehen ist,
- die beiden Elektrodenpaare (S1, E1; S2, E2) so angeordnet sind und untereinander verschaltet werden, dass mittels der Elektrodenpaare (S1, E1; S2, E2) eine Kapazitätsänderung durch ein Hindernis in einem zu den ersten und zweiten Überwachungsbereichen (B1', B2') unterschiedlichen dritten Überwachungsbereich (B12') detektierbar ist, in dem das Verriegelungsteil (4) liegt, und
- die beiden Elektrodenpaare (S1, E1; S2, E2) zueinander beabstandet auf unterschiedlichen Seiten des Verriegelungsteils (4) angeordnet sind und sich der dritte Überwachungsbereich (B12') im Wesentlichen zwischen den beiden Elektrodenpaaren (S1, E1; S2, E2) erstreckt.

## Claims

1. A method for controlling an adjusting movement of a vehicle closing element of a vehicle to be closed in a manner actuated by an external force, wherein
- a body opening (O) of the vehicle (K) can be closed by the vehicle closing element (1) in a closed position and the vehicle closing element (1) has a locking part (4), via which the vehicle closing element (1) can be locked in the closed position, and
- an obstacle in the path of adjustment of the closing vehicle closing element (1) can be detected by means of a capacitive anti-trap system, such that the adjusting movement of the vehicle closing element (1) can be controlled by means of the anti-trap system in such a way that an obstacle is prevented from being trapped between the closing vehicle closing element (1) and a vehicle structure (F) in the region of the body opening (O),
- an obstacle in a monitoring region (B3, B12', B1b") around the locking part (4) provided on the vehicle closing element (1) is also detected by means of the capacitive anti-trap system in order to prevent a collision of this locking part (4) with an obstacle at least as the vehicle closing element (1) closes,
**characterized in that**
(a) the vehicle closing element (1) has at least three different closing edges (11, 12, 13), via each of which the vehicle closing element (1) rests in the shut position thereof on the vehicle structure (F), and the locking part (4) is provided on one (12) of the closing edges (11, 12, 13), wherein at least two electrode pairs (S1, E1; S2, E2) of the anti-trap system are each provided with a transmitter electrode (S1; S2) and a receiver electrode (E1; E2), which each extend over at least a part of two closing edges (11, 12; 12, 13) in such a way that both a situation of entrapment at least at one of the closing edges (11, 12, 13) and an imminent collision of the locking part (4) with an obstacle can be detected with each electrode pair (S1, E1; S2, E2) on the basis of an electric capacitance changing on account of an obstacle,
and/or
(b) the anti-trap system has a first and a second electrode pair (S1, E1; S2, E2), wherein
- the first electrode pair (S1, E1) with a first transmitter electrode (S1) and a first receiver electrode (S2) is provided in order to produce a first electric field in a first monitoring region (B1'),
- the second electrode pair (S2, E2) with a second transmitter electrode (S2) and a second receiver electrode (E2) is provided in order to produce an electric field in a second monitoring region (B2'),
- the two electrode pairs (S1, E1; S2, E2) are arranged and interconnected such that, by means of the electrode pairs (S1, E1; S2, E2), a capacitance change on account of an obstacle can be detected in a third monitoring region (B12'), which is different from the first and second monitoring regions (B1', B2') and in which the locking part (4) is located, and
- the two electrode pairs (S1, E1; S2, E2) are arranged at a distance from one another on different sides of the locking part (4) and the third monitoring region (B12') extends substantially between the two electrode pairs (S1, E1; S2, E2).

2. The method as claimed in claim 1, **characterized in that** a change of an electric capacitance is evaluated for the detection of an obstacle in the monitoring region (B3, B12', B1b").

3. The method as claimed in one of claims 1 or 2, **characterized in that** both the evaluation of whether a situation of entrapment is present, in which an obstacle is trapped, and the evaluation of whether a situation of collision is present, in which the locking part (4) collides with an obstacle, are performed by means of the electronic evaluation unit (5) of the anti-trap system.

4. The method as claimed in one of the preceding claims, **characterized in that** the two electrode pairs (S1, E1; S2, E2) are arranged at a distance from one another on different sides of the locking part (4) and the third monitoring region (B12') extends between the two ends of the electrodes (S1, E1, S2, E2) of the electrode pairs (S1, E1; S2, E2).

5. The method as claimed in one of the preceding claims, **characterized in that** the first transmitter electrode (S1) and the second receiver electrode (E2) and/or the second transmitter electrode (S2) and the first receiver electrode (E1) are interconnected in order to be able to detect an obstacle in the third monitoring region (B12').

6. The method as claimed in claim 5, **characterized in that** the first transmitter electrode (S1) and the second receiver electrode (E2) and the second transmitter electrode (S2) and the first receiver electrode (E1) are interconnected in succession in order to be able to detect an obstacle in the third monitoring region (B12').

7. The method as claimed in one of preceding claims, **characterized in that** at least one signal representative of the first monitoring region (B1'), at least one signal representative of the second monitoring region (B1') and at least one signal representative of the third monitoring region (B12') are evaluated in succession in a predefined order via the electronic evaluation unit (5).

8. The method as claimed in one of preceding claims, **characterized in that** the connection of the electrode pairs (S1, E1; S2, E2) is controlled by means of a time multiplexer.

9. A capacitive anti-trap system for a vehicle, by means of which an obstacle in the path of adjustment of a vehicle closing element to be closed in a manner actuated by an external force can be detected and by means of which an obstacle is prevented from being trapped between the closing vehicle closing element and a vehicle structure in the region of a body opening that is closed by the vehicle closing element in a closed position, wherein the anti-trap system comprises at least the following:
- at least one electrode pair comprising a transmitter electrode (S1; S2) and a receiver electrode (E1, E1A, E1B; E2), wherein an electric field is produced by activating the transmitter electrode (S1; S2) with electric alternating current and is influenced by an obstacle in such a way that an electric capacitance is changed in a manner that can be measured, and
- an electronic evaluation unit (5), by means of which a signal received via a receiver electrode (E1, E1A, E1B, E2) can be evaluated in terms of whether an electric capacitance has changed on account of an obstacle in the path of adjustment of the vehicle closing element (1),
- the capacitive anti-trap system is designed and intended also to detect an object in a monitoring region (B3, B12', B1b") around a locking part (4) on the vehicle closing element (1) in order to prevent a collision of this locking part (4) with an obstacle at least as the vehicle closing element (1) closes,
**characterized in that**
(a) the vehicle closing element (1) has at least three different closing edges (11, 12, 13), via each of which the vehicle closing element (1) rests in the shut position thereof on the vehicle structure (F), and the locking part (4) is provided on one (12) of the closing edges (11, 12, 13), wherein at least two electrode pairs (S1, E1; S2, E2) of the anti-trap system are each provided with a transmitter electrode (S1; S2) and a receiver electrode (E1; E2), which each extend over at least a part of two closing edges (11, 12; 12, 13) in such a way that both a situation of entrapment at least at one of the closing edges (11, 12, 13) and an imminent collision of the locking part (4) with an obstacle can be detected with each electrode pair (S1, E1; S2, E2) on the basis of an electric capacitance changing on account of an obstacle,
and/or
(b) the anti-trap system has a first and a second electrode pair (S1, E1; S2, E2), wherein
- the first electrode pair (S1, E1) with a first transmitter electrode (S1) and a first receiver electrode (S2) is provided in order to produce a first electric field in a first monitoring region (B1'),
- the second electrode pair (S2, E2) with a second transmitter electrode (S2) and a second receiver electrode (E2) is provided in order to produce an electric field in a second monitoring region (B2'),
- the two electrode pairs (S1, E1; S2, E2) are arranged and interconnected such that, by means of the electrode pairs (S1, E1; S2, E2), a capacitance change on account of an obstacle can be detected in a third monitoring region (B12'), which is different from the first and second monitoring regions (B1', B2') and in which the locking part (4) is located, and
- the two electrode pairs (S1, E1; S2, E2) are arranged at a distance from one another on different sides of the locking part (4) and the third monitoring region (B12') extends substantially between the two electrode pairs (S1, E1; S2, E2).

## Revendications

1. Procédé pour la commande d'un mouvement de déplacement d'un élément de fermeture de véhicule, à fermer par actionnement par une force extérieure, d'un véhicule, dans lequel
- dans une position de fermeture, une ouverture de carrosserie (O) du véhicule (K) peut être fermée par l'élément de fermeture de véhicule (1) et l'élément de fermeture de véhicule (1) présente une pièce de verrouillage (4) par l'intermédiaire de laquelle l'élément de fermeture de véhicule (1) est verrouillable dans la position de fermeture, et
- au moyen d'un système anti-pincement capacitif, un obstacle sur le parcours de l'élément de fermeture de véhicule (1) qui se ferme est détectable de sorte qu'au moyen du système anti-pincement, le mouvement de déplacement de l'élément de fermeture de véhicule (1) puisse être commandé de manière à éviter qu'un obstacle entre l'élément de fermeture de véhicule (1) qui se ferme et une structure de véhicule (F) soit pincé dans la zone de l'ouverture de carrosserie (O),
- au moyen du système anti-pincement capacitif, un obstacle dans une zone de surveillance (B3, B12', B1b") autour de la pièce de verrouillage (4) prévue au niveau de l'élément de fermeture de véhicule (1) est également détecté pour éviter, au moins lors de la fermeture de l'élément de fermeture de véhicule (1), une collision entre cette pièce de verrouillage (4) et un obstacle,
**caractérisé en ce que**
(a) l'élément de fermeture de véhicule (1) présente au moins trois bords de fermeture (11, 12, 13) différents les uns des autres par l'intermédiaire desquels l'élément de fermeture de véhicule (1) repose, dans sa position de fermeture, respectivement contre la structure de véhicule (F) et la pièce de verrouillage (4) est prévue au niveau de l'un (12) des bords de fermeture (11, 12, 13), dans lequel au moins deux paires d'électrodes (S1, E1 ; S2, E2) du système anti-pincement sont prévues avec respectivement une électrode d'émission (S1 ; S2) et une électrode de réception (E1 ; E2) qui s'étendent respectivement sur au moins une partie de deux bords de fermeture (11, 12 ; 12, 13), de manière qu'avec chaque paire d'électrodes (S1, E1 ; S2, E2), à l'aide d'une capacité électrique variant du fait d'un obstacle, il soit possible de détecter une situation de pincement au niveau d'au moins l'un des bords de fermeture (11, 12, 13) tout comme également une collision imminente entre la pièce de verrouillage (4) et un obstacle, et/ou
(b) le système anti-pincement présente une première et une deuxième paire d'électrodes (S1, E1 ; S2, E2), dans lequel
- la première paire d'électrodes (S1, E1) est prévue avec une première électrode d'émission (S1) et une première électrode de réception (S2) pour la génération d'un premier champ électrique dans une première zone de surveillance (B1'),
- la deuxième paire d'électrodes (S2, E2) est prévue avec une deuxième électrode d'émission (S2) et une deuxième électrode de réception (E2) pour la génération d'un champ électrique dans une deuxième zone de surveillance (B2'),
- les deux paires d'électrodes (S1, E1 ; S2, E2) sont disposées et interconnectées entre elles de manière qu'au moyen des paires d'électrodes (S1, E1 ; S2, E2), il soit possible de détecter une variation de capacité du fait d'un obstacle dans une troisième zone de surveillance (B12'), différente par rapport aux première et deuxième zones de surveillance (B1', B2'), dans laquelle la pièce de verrouillage (4) se trouve, et
- les deux paires d'électrodes (S1, E1 ; S2, E2) sont disposées à distance l'une de l'autre sur différents côtés de la pièce de verrouillage (4) et la troisième zone de surveillance (B12') s'étend sensiblement entre les deux paires d'électrodes (S1, E1 ; S2, E2).

2. Procédé selon la revendication 1, **caractérisé en ce que**, pour la détection d'un obstacle dans la zone de surveillance (B3, B12', B1b"), une variation d'une capacité électrique est évaluée.

3. Procédé selon l'une des revendications 1 ou 2, **caractérisé en ce que** l'évaluation quant à savoir s'il y a une situation de pincement, dans laquelle un obstacle est pincé, tout comme également l'évaluation quant à savoir s'il y a une situation de collision, dans laquelle la pièce de verrouillage (4) entre en collision avec un obstacle, sont réalisées au moyen de l'unité d'évaluation électronique (5) du système anti-pincement.

4. Procédé selon l'une des revendications précédentes, **caractérisé en ce que** les deux paires d'électrodes (S1, E1 ; S2, E2) sont disposées à distance l'une de l'autre sur différents côtés de la pièce de verrouillage (4) et la troisième zone de surveillance (B12') s'étend entre les extrémités des électrodes (S1, E1, S2, E2) des paires d'électrodes (S1, E1 ; S2, E2).

5. Procédé selon l'une des revendications précédentes, **caractérisé en ce que** la première électrode d'émission (S1) et la deuxième électrode de réception (E2) et/ou la deuxième électrode d'émission (S2) et la première électrode de réception (E1) sont interconnectées l'une avec l'autre pour pouvoir détecter un obstacle dans la troisième zone de surveillance (B12').

6. Procédé selon la revendication 5, **caractérisé en ce que** la première électrode d'émission (S1) et la deuxième électrode de réception (E2) et la deuxième électrode d'émission (S2) et la première électrode de réception (E1) sont successivement interconnectées les unes avec les autres pour pouvoir détecter un obstacle dans la troisième zone de surveillance (B12').

7. Procédé selon l'une des revendications précédentes, **caractérisé en ce que** par l'intermédiaire de l'unité d'évaluation électronique (5), dans un ordre prédéfini, au moins un signal représentatif pour la première zone de surveillance (B1'), au moins un signal représentatif pour la deuxième zone de surveillance (B1') et au moins un signal représentatif pour la troisième zone de surveillance (B12') sont évalués successivement.

8. Procédé selon l'une des revendications précédentes, **caractérisé en ce que** l'interconnexion des paires d'électrodes (S1, E1 ; S2, E2) est commandée au moyen d'un multiplexeur temporel.

9. Système anti-pincement capacitif pour un véhicule, au moyen duquel un obstacle sur le parcours d'un élément de fermeture de véhicule à fermer par actionnement par une force extérieure peut être détecté et au moyen duquel il est évité qu'un obstacle entre l'élément de fermeture de véhicule qui se ferme et une structure de véhicule dans la zone d'une ouverture de carrosserie, laquelle est fermée par l'élément de fermeture de véhicule dans une position de fermeture, soit pincé, dans lequel le système anti-pincement comprend au moins ce qui suit :
- au moins une paire d'électrodes avec une électrode d'émission (S1 ; S2) et une électrode de réception (E1, E1A, E1B ; E2), dans lequel, par commande de l'électrode d'émission (S1 ; S2) avec du courant électrique alternatif, un champ électrique est généré, lequel est influencé par un obstacle de manière qu'une capacité électrique varie de façon mesurable, et
- une unité d'évaluation électronique (5), au moyen de laquelle un signal réceptionné par l'intermédiaire d'une électrode de réception (E1, E1A, E1B, E2) peut être évalué quant à savoir si une capacité électrique a varié du fait d'un obstacle sur le parcours de l'élément de fermeture de véhicule (1),
- le système anti-pincement capacitif est conçu et prévu pour détecter également un obstacle dans une zone de surveillance (B3, B12', B1b") autour d'une pièce de verrouillage (4) au niveau de l'élément de fermeture de véhicule (1) pour éviter, au moins lors de la fermeture de l'élément de fermeture de véhicule (1), une collision entre cette pièce de verrouillage (4) et un obstacle,
**caractérisé en ce que**
(a) l'élément de fermeture de véhicule (1) présente au moins trois bords de fermeture (11, 12, 13) différents les uns des autres par l'intermédiaire desquels l'élément de fermeture de véhicule (1) repose, dans sa position de fermeture, respectivement contre la structure de véhicule (F), et la pièce de verrouillage (4) est prévue au niveau de l'un (12) des bords de fermeture (11, 12, 13), dans lequel au moins deux paires d'électrodes (S1, E1 ; S2, E2) du système anti-pincement sont prévues avec respectivement une électrode d'émission (S1 ; S2) et une électrode de réception (E1 ; E2) qui s'étendent respectivement sur au moins une partie de deux bords de fermeture (11, 12 ; 12, 13), de manière qu'avec chaque paire d'électrodes (S1, E1 ; S2, E2), à l'aide d'une capacité variant du fait d'un obstacle, il soit possible de détecter une situation de pincement au niveau d'au moins l'un des bords de fermeture (11, 12, 13) tout comme également une collision imminente entre la pièce de verrouillage (4) et un obstacle, et/ou
(b) le système anti-pincement présente une première et une deuxième paire d'électrodes (S1, E1 ; S2, E2), dans lequel
- la première paire d'électrodes (S1, E1) est prévue avec une première électrode d'émission (S1) et une première électrode de réception (S2) pour la génération d'un premier champ électrique dans une première zone de surveillance (B1'),
- la deuxième paire d'électrodes (S2, E2) est prévue avec une deuxième électrode d'émission (S2) et une deuxième électrode de réception (E2) pour la génération d'un champ électrique dans une deuxième zone de surveillance (B2'),
- les deux paires d'électrodes (S1, E1 ; S2, E2) sont disposées et interconnectées entre elles de manière qu'au moyen des paires d'électrodes (S1, E1 ; S2, E2), il soit possible de détecter une variation de capacité du fait d'un obstacle dans une troisième zone de surveillance (B12'), différente par rapport aux première et deuxième zones de surveillance (B1', B2'), dans laquelle la pièce de verrouillage (4) se trouve, et
- les deux paires d'électrodes (S1, E1 ; S2, E2) sont disposées à distance l'une de l'autre sur différents côtés de la pièce de verrouillage (4) et la troisième zone de surveillance (B12') s'étend sensiblement entre les deux paires d'électrodes (S1, E1 ; S2, E2).
